(19) Europäisches Patentamt
European Patent Office
Office européen des brevets

(11) EP 1 112 487 B1

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(21) Anmeldenummer: **99969149.6**

(22) Anmeldetag: **09.09.1999**

(51) Int Cl.$^7$: **G01N 27/00**

(86) Internationale Anmeldenummer:
**PCT/EP1999/006673**

(87) Internationale Veröffentlichungsnummer:
**WO 2000/016080 (23.03.2000 Gazette 2000/12)**

(54) **VERFAHREN ZUR HERSTELLUNG EINER REFERENZELEKTRODE FÜR EINE GALVANISCHE ZELLE MIT KATIONENLEITENDEN FESTELEKTROLYTEN**

METHOD FOR PRODUCING A REFERENCE ELECTRODE FOR A GALVANIC CELL WITH CATION-CONDUCTING SOLID ELECTROLYTES

PROCEDE DE PRODUCTION D'UNE ELECTRODE DE REFERENCE POUR UNE PILE GALVANIQUE AVEC DES ELECTROLYTES SOLIDES CONDUCTEURS DE CATIONS

(84) Benannte Vertragsstaaten:
**AT BE CH CY DE DK ES FI FR GB GR IE IT LI LU MC NL PT SE**

(30) Priorität: **11.09.1998 DE 19841707**

(43) Veröffentlichungstag der Anmeldung:
**04.07.2001 Patentblatt 2001/27**

(73) Patentinhaber: **Max-Planck-Gesellschaft zur Förderung der Wissenschaften e.V.**
**80539 München (DE)**

(72) Erfinder:
- **NÄFE, Helfried**
  **D-70563 Stuttgart (DE)**
- **GOLLHOFER, Stephanie**
  **D-70736 Fellbach (DE)**
- **ALDINGER, Fritz**
  **D-70771 Leinfelden-Echterdingen (DE)**

(74) Vertreter: **Böhm, Brigitte, Dipl.-Chem. Dr. et al**
**Weickmann & Weickmann**
**Patentanwälte**
**Kopernikusstrasse 9**
**81679 Munich (DE)**

(56) Entgegenhaltungen:
**DE-A- 19 503 783** **GB-A- 2 046 502**

- **BLOOM I., HASH M.C.: "Ceramic/Glass Electrolytes for Sodium-Ion-Conducting Applications" J.ELECTROCHEM.SOC., Bd. 139, Nr. 4, 1992, Seiten 1115-1118, XP002127329 US**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 112 487 B1

Printed by Jouve, 75001 PARIS (FR)

## Beschreibung

### Anwendungsgebiet der Erfindung

Die Erfindung betrifft die Art und Weise der Herstellung einer Referenzelektrode für eine galvanische Zelle mit beispielsweise lithium-, natrium- oder kaliumionenleitendem Festelektrolyten, wie sie für potentiometrische Sensoren zur Detektion von $CO_2$, $SO_x$ und $NO_x$ zum Einsatz kommt.

### Charakteristik der bekannten technischen Lösungen

Es ist bereits eine Reihe von Referenzelektroden für natriumionenleitende Festelektrolyte bekannt, deren chemisches Potential sich ergibt aus dem Gleichgewicht zwischen einem $Na_2O$ enthaltenden Doppeloxid in Form $Na_xMe_yO_z$ und andererseits (i) dem jeweiligen Oxid $Me_mO_n$ oder (ii) einem Doppeloxid $Na_aMe_bO_c$ mit geringerem $Na_2O$-Gehalt:

(i) $Na^+$-Festelektrolyt | $Na_xMe_yO_z$, $Me_mO_n$ | $O_2$, Edelmetall
(ii)

$Na^+$-Festelektrolyt | $Na_xMe_yO_z$, $Na_aMe_bO_c$ | $O_2$, Edelmetall

II I

In diesen Systemen realisiert sich das Natriumpotential aufgrund folgender Zusammenhänge:

(i)

$$Na_xMe_yO_z \rightarrow x\ Na + \frac{x}{4} O_2 + q\ Me_mO_n \qquad (y = qm,\ z = cn + x/2)$$

(ii

$$Na_xMe_yO_z \rightarrow (x\text{-}a)Na + \frac{x\text{-}a}{4} O_2 + Na_aMe_bO_c \qquad (y = b,\ z = c + (x\text{-}a)/2)$$

Ausgehend davon ist das Na-Potential, wenn die jeweils am Gleichgewicht beteiligten Oxide in reiner Form koexistieren, wie folgt definiert:

(i) In

$$a_{Na} = \frac{\Delta_f G^{\bullet}_{Na_xMe_yO_z} - q \cdot \Delta_f G^{\bullet}_{Me_mO_n}}{x\ RT} - \frac{1}{4} \ln PO_2 \qquad (1a)$$

(ii) In

$$a_{Na} = \frac{\Delta_f G^{\bullet}_{Na_xMe_yO_z} - c \cdot \Delta_f G^{\bullet}_{Na_aMe_bO_c}}{(x\text{-}a)\ RT} - \frac{1}{4} \ln PO_2 \qquad (1b)$$

wobei

$$\Delta_f G^{\bullet}_{Na_xMe_yO_z},\ \Delta_f G^{\bullet}_{Na_aMe_bO_c} \text{ und } \Delta_f G^{\bullet}_{Me_mO_n}$$

die freien Standardbildungsenthalpien der beteiligten Oxide sind. Das Natriumpotential ist also stets eine definierte Funktion allein nur der Temperatur und des Sauerstoffpartialdruckes in der Umgebung. Da die Meßelektroden bei einer

Reihe von Gassensoren von ähnlicher Struktur und damit ebenfalls sauerstoffdruckabhängig sind, wird das Meßsignal des kompletten Sensors letztendlich unabhängig vom Sauerstoffpotential in der umgebenden Gasatmosphäre.

Beispiele für die genannten Fälle sind u.a.: (i) $NaAl_{11}O_{17}/Al_2O_3$ [1], $Na_2Si_2O_5/SiO_2$ [3]; (ii) $NaAl_5O_8$ und $NaAl_{11}O_{17}$ [1, 2].

Üblicherweise werden die in reiner Form als Festkörper vorliegenden Oxide pulverisiert, wahlweise vermischt mit einem inerten Elektronenleiter, z.B. Au, zu einem Pellet verpreßt und als kompakter Preßling oder Sinterkörper mit dem Festelektrolyten in Kontakt gebracht. Die Elektrodenkontaktfläche (Phasengrenze 11) ist stets die zweier Festkörper mit den üblichen Nachteilen, daß selbst bei polierten Oberflächen nur punktweise eine Berührung zustande kommt. Außerdem ist die minimal erreichbare Schichtdicke, d.h. der räumliche Abstand zwischen den Phasengrenzen I und II, nach unten hin begrenzt, wodurch das Sauerstoffpotential an der Phasengrenze I sich von dem an der Phasengrenze 11 unterscheiden kann. Die Identität beider Potentiale ist aber Voraussetzung für die Gültigkeit der Gleichungen (1a) und (1b).

## Ziel der Erfindung

Ziel der Erfindung ist die Schaffung einer einfach herstellbaren, dünnen und einen innigen Kontakt mit dem Festelektrolyten gewährleistenden Referenzelektrode für kationenleitende Festelektrolyte.

## Wesen der Erfindung

Erfindungsgemäß kann das Ziel dadurch erreicht werden, daß eines der Oxide als Hydro- oder Organosol hergestellt wird und dadurch in flüssiger Form bei Zimmertemperatur oder bei nur leicht erhöhter Temperatur auf dem Elektrolyten einen Festkörperfilm ausbildet.

## Ausführungsbeispiel

Beispielsweise lassen sich Na- und K-Silikatgläser unter hohem Druck in Wasser auflösen (Wasserglas). Ein Tropfen einer solchen Wasserglaslösung wird auf die Festelektrolytoberfläche so aufgebracht, daß sich ein dünner Film bildet, in den vor dem Trocknen einige wenige Körner Quarzsand ($SiO_2$) gegeben werden. Mit dem Wasserglas läßt sich zugleich ein als Ableitelektrode dienendes Au-Netz auf der Oberfläche des Festelektrolyten fixieren (siehe Figur 1). Figur 2 zeigt Potentialmessungen von erfindungsgemäßen Referenzelektroden bei verschiedenen Temperaturen.

Denkbar sind andere Systeme, hauptsächlich auf der Basis von Silikaten, z.B. Natriumalumosilikate im Gleichgewicht mit reinem $Al_2O_3$ und $SiO_2$, die sich als Sole herstellen und ebenfalls in flüssiger Form aufbringen lassen.

## Referenzen:

[1] J.T. Kummer, Prog. Solid State Chem. 7 (1972), 141
[2] G. Rog, S. Kozinski, A. Kozlowska-Rog, Electrochim. Acta 28 (1983), 43
[3] H.-H. Möbius, P. Shuk, W. Zastrow, Fresenius J. Anal. Chem. 356 (1996) 221


## Patentansprüche

1. Verfahren zur Herstellung von Referenzelektroden für galvanische Zellen mit Festelektrolyten, enthaltend Metalloxide oder/und Doppeloxide,
**dadurch gekennzeichnet,**
**dass** man mindestens ein Oxid oder Doppeloxid als Hydro- oder Organosol herstellt und in flüssiger Form auf den Elektrolyten unter Ausbildung eines Festkörperfilms aufbringt.

2. Verfahren nach Anspruch 1,
**dadurch gekennzeichnet,**
**daß** ein Doppeloxid $Me^1_xMe^2_yO_z$ sowie (i) ein Metalloxid $Me^2_mO_n$ oder (ii) ein Doppeloxid $Me^1_aMe^2_bO_c$ mit geringerem Gehalt an $Me^1$ im Referenzelektrodenmaterial vorhanden ist.

3. Verfahren nach Anspruch 1 oder 2,

**dadurch gekennzeichnet,**
**dass** man als Doppeloxide Natrium- oder Kaliumsitikatgläser verwendet, diese als Hydrosol herstellt und dieses Hydrosol auf die Festelektrolytoberfläche als dünnen Film aufbringt, in den vor dem Trocknen einige Körner Quarzsand gegeben werden.

## Claims

1. A method for producing reference electrodes for galvanic cells having solid electrolytes, comprising metal oxides or/and double oxides,
**characterized in that**
at least one oxide or double oxide is prepared as a hydrosol or organosol and applied in liquid form to the electrolyte to form a solid film.

2. The method as claimed in claim 1,
**characterized in that**
a double oxide $Me^1_xMe^2_yO_z$ and (i) a metal oxide $Me^2_mO_n$ or (ii) a double oxide $Me^1_aMe^2_bO_c$ with a lower $Me^1$ content is present in the reference electrode material.

3. The method as claimed in claim 1 or 2,
**characterized in that**
the double oxides used are sodium or potassium silicate glasses, that these are prepared as a hydrosol and that said hydrosol is applied to the solid electrolyte surface as a thin film into which, prior to drying, a few grains of quartz sand are introduced.

## Revendications

1. Procédé pour la production d'électrodes de référence pour des piles galvaniques avec des électrolytes solides, contenant des oxydes métalliques ou/et des oxydes doubles,
**caractérisé en ce que**,
l'on produit au moins un oxyde ou oxyde double en tant qu'hydro - ou organosol et on l'applique sous forme liquide sur les électrolytes en formant une pellicule de corps solide.

2. Procédé selon la revendication 1,
**caractérisé en ce que**,
un oxyde double $Me^1_xMe^2_yO_z$ ainsi que (i) un oxyde métallique $Me^2_mO_n$ ou (ii) un oxyde double $Me^1_aMe^2_bO_c$ avec une teneur moindre en $Me^1$ est présent dans le matériau d'électrodes de référence.

3. Procédé selon la revendication 1 ou 2,
**caractérisé en ce que**,
en tant qu'oxyde double, on utilise des verres de silicate de potassium ou de sodium, ceux-ci sont produits comme hydrosol et cet hydrosol est appliqué sur la surface de l'électrolyte solide sous forme de pellicule mince, dans laquelle avant le séchage on introduit quelques grains de sable de quartz.

Figur 1

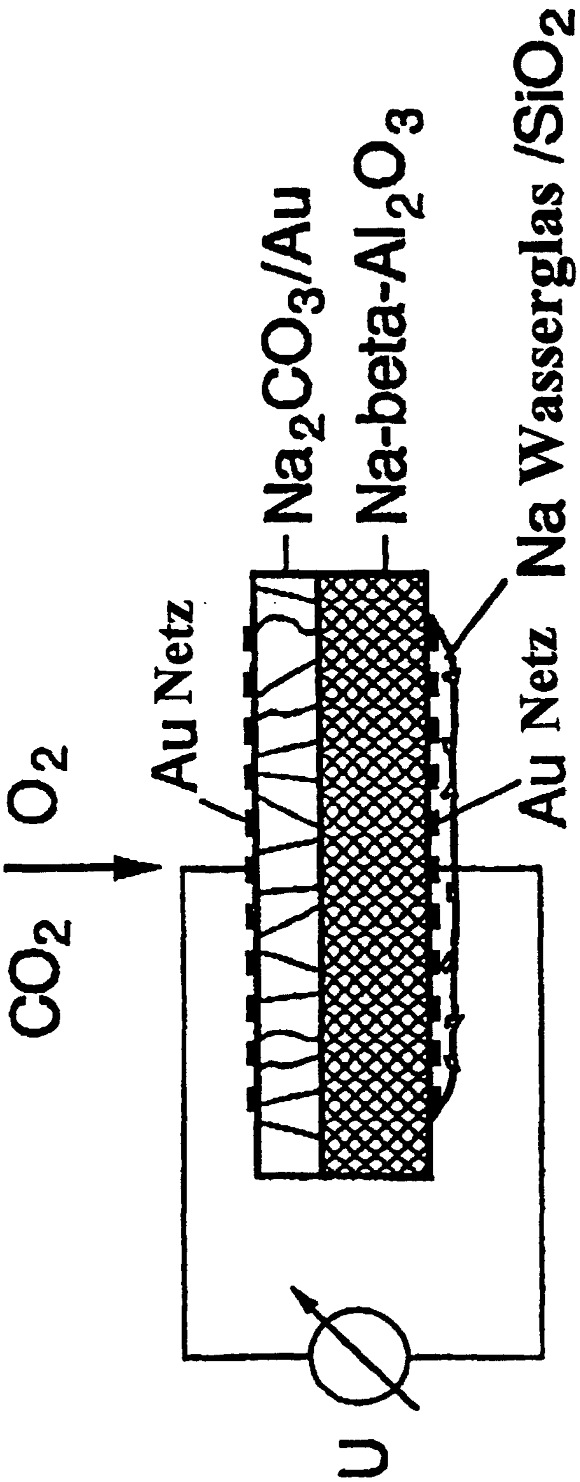
$CO_2$
$O_2$
Au Netz
Au Netz
$Na_2CO_3/Au$
$Na$-beta-$Al_2O_3$
Na Wasserglas $/SiO_2$
U

Figur 2

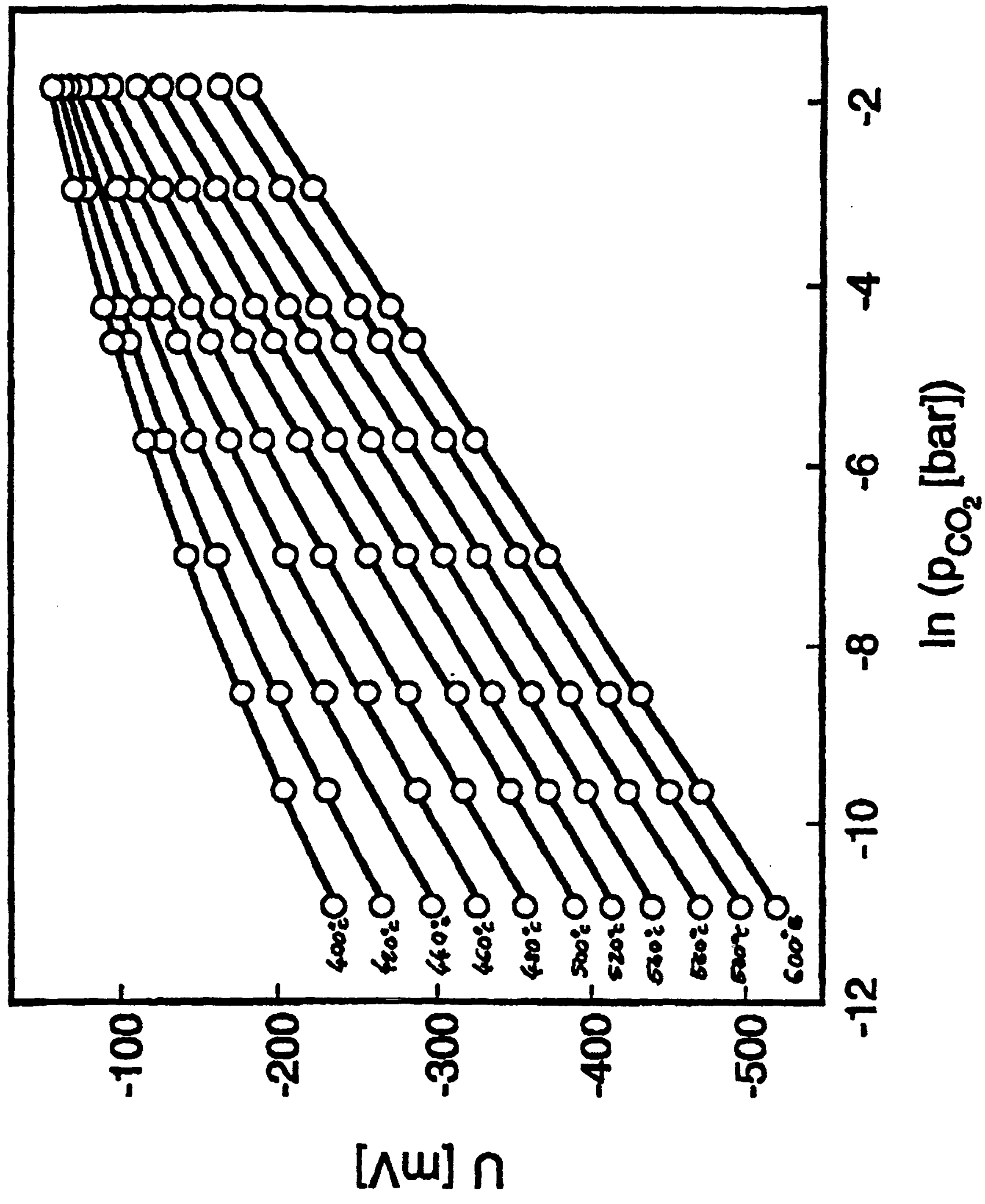
U [mV]
-100
-200
-300
-400
-500
ln (p_CO2 [bar])
-12
-10
-8
-6
-4
-2
400°C
420°C
440°C
460°C
480°C
500°C
520°C
540°C
560°C
580°C
600°C